# EUROPEAN PATENT APPLICATION

(11) **EP 2 849 429 A1**
(43) Date of publication of application: **18.03.2015**
(21) Application number: 14177537.9
(22) Date of filing: 17.07.2014
(51) Int. Cl.: H04N 5/232

(54) **Mobile terminal and panorama capturing method thereof**

(30) Priority: 23.07.2013 KR 20130086978
(71) Applicant: LG Electronics Inc., Yeongdeungpo-gu, Seoul 150-721 (KR)
(72) Inventor: Park, Jongkyeong, 137-893 SEOUL (KR)
(74) Representative: Cabinet Plasseraud

(57) **Abstract**

A method of controlling a mobile terminal, and which includes displaying a camera preview on a display of the mobile terminal; selecting an object to capture in the camera preview; displaying a capture guide on the display indicating a subsequent capturing region along a moving direction of the selected object; and capturing, via a controller of the mobile terminal, a panoramic image including a moving path of the object in the camera preview when the mobile terminal is moved so the camera preview substantially aligns with the capture guide within a predetermined amount.

## Description

### BACKGROUND OF THE INVENTION

### 1. Field of the Invention

This specification relates to a virtual reality (VR) panorama, and more particularly, a mobile terminal capable of capturing a panoramic image including an entire moving path of an object by providing a capture guide, and a panorama capturing method thereof.

### 2. Background of the Invention

Mobile terminals can perform various functions, for example, data and voice communication, capturing images or video, storing voice, reproducing music files via a speaker system, displaying images or video and the like. Some mobile terminals may include an additional function of playing games, and other mobile terminals may be implemented as multimedia players. In addition, mobile terminals can receive broadcast or multicast signals to allow viewing of video or television programs.

A mobile terminal can capture images by changing a capture angle, and the captured images are sequentially connected and reconstructed into one image, to obtain a photo similar to a user's viewing angle. This is referred to as a panorama picture.

The mobile terminal continuously captures many sheets of images in horizontal and vertical directions in a panorama capturing mode, and stores the continuously-captured images in a memory. The images stored in the memory are connected into one image in an internal/external image processor.

However, the related art terminal requires a user to capture images by randomly changing a capture angle and a capture direction and reconstruct the captured images into a panoramic image. Accordingly, each image is unnaturally connected. Also, in the related art, the panoramic image is constructed by capturing a movement of an object only in one camera preview, whereby it is impossible to construct a panoramic image including an entire moving path of the object.

### SUMMARY OF THE INVENTION

Therefore, an aspect of the detailed description is to provide a mobile terminal putting a wide space into one screen by implementing a panoramic image using a movement of an object captured in a plurality of continuous camera views, and a panorama capturing method thereof.

Another aspect of the detailed description is to provide a mobile terminal for capturing a panoramic image including an entire moving path of an object by providing a capture guide, and a panorama capturing method thereof.

To achieve these and other advantages and in accordance with the purpose of this specification, as embodied and broadly described herein, there is provided a panorama capturing method for a mobile terminal including displaying a camera preview, selecting an object to capture by recognizing at least one object, which moves horizontally and vertically in the camera preview, displaying a capture guide indicating a subsequent capturing region along a moving direction of the selected object, and capturing a panoramic image including a moving path of the object in the camera preview which moves along the capture guide.

The object guide may be an indicator indicating that the object is a target to track, and be displayed to be distinctive for each object.

The object guide may be output on a selected object or automatically displayed on a moving object.

The capture guide may be displayed to partially overlap the camera preview when the object is moved away from a center of the preview by more than a predetermined distance. The capture guide may be formed in a form of a line or surface (or plate), which is the same shape as the camera preview.

The capture guide may be displayed sharply when the object moves away from a center of the preview by a predetermined distance, or displayed to be gradually sharp according to a moving distance of the object, starting from a time point of being apart from the center of the preview by the predetermined distance.

Upon capturing the panoramic image, a background may be captured once in each preview, and the moving path of the object may be continuously captured in each preview by a predetermined number of times so as to be output to the preview.

The method may further include displaying the captured panoramic image. The moving path of the object may be displayed in the sequence of time when the panoramic image is output.

To achieve these and other advantages and in accordance with the purpose of this specification, as embodied and broadly described herein, there is provided a mobile terminal including a display unit configured to display a camera preview, a controller configured to display a capture guide indicating a subsequent capturing region along a moving direction of an object when the object moves in the camera preview, track the object in the camera view, which moves along the capture guide, and capture a panoramic image including a moving path of the object, and a memory configured to store the captured panoramic image.

The controller may automatically display an object guide to be distinctive for each object, when at least one object to track is selected or a movement of the at least one object is sensed.

The controller may display the capture guide to partially overlap the camera preview when the object moves away from a center of the preview by more than a predetermined distance, and the capture guide may be formed in a form of a line or surface (or plate), which is the same shape as the camera preview.

The controller may display the capture guide sharply when the object moves away from a center of the preview by a predetermined distance, or to be gradually sharp according to a moving distance of the object, starting from a time point of being apart from the center of the preview by the predetermined distance.

The controller may capture a background once in each preview upon capturing the panoramic image, and continuously capture the moving path of the object in each preview by a predetermined number of times so as to o output to the preview.

The controller may display the captured panoramic image, and display the moving path of the object in the sequence of time when the captured panoramic image is output.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1 is a block diagram of a mobile terminal in accordance with one embodiment of the present invention;
FIG. 2A is a block diagram of a wireless communication system operable with a mobile terminal in accordance with one embodiment;
FIG. 2B is an overview of a Wi-Fi positioning system operable with a mobile terminal in accordance with one embodiment;
FIG. 3 is a view illustrating an embodiment of providing a capture guide disclosed herein;
FIGS. 4(a) to 4(f) are views illustrating examples of various shapes of an object guide;
FIGS. 5A and 5B are views illustrating examples of a display (output, indication) form of a capture guide;
FIG. 6A to 6C are views illustrating an example of automatically selecting an object to track down in accordance with an embodiment of the present invention;
FIG. 7 is a view illustrating an example of indicating an object designated as a target to track;
FIG. 8 is a flowchart illustrating a panoramic image generating method in a mobile terminal in accordance with an embodiment;
FIGS. 9A and 9B are views illustrating an embodiment of a method for adjusting a capture posture upon capturing a panoramic image;
FIGS. 10(a) to 10(c) are views illustrating an operation of collecting and storing movement information related to an object according to a size variation (change) and a moving path of the object;
FIGS. 11(a) to 11(d) are views illustrating an example of outputting (displaying, indicating) a moving path of an object which less moves;
FIG. 12 is a flowchart illustrating an operation of filling a non-captured portion upon capturing a moving path of an object;
FIGS. 13A to 13C are detailed views of FIG. 12;
FIG. 14 is an view illustrating an image processing method when an object moves back to an already-captured region during movement;
FIGS. 15A and 15B are views illustrating a processing method when an object moves different from an expected direction;
FIG. 16 is a flowchart illustrating an image processing method when an object is located at a boundary of a capturing area;
FIG. 17 is a detailed view of FIG. 16;
FIG. 18 is a view illustrating another embodiment of constructing a panoramic image using a moving path of a tracked object;
FIG. 19 is a view illustrating a useful scenario of FIG. 18;
FIGS. 20A and 20B are views illustrating an embodiment of inducing a camera to move to an empty space while capturing a VR panoramic image;
FIG. 21 is a flowchart illustrating an operation of playing a panoramic image in accordance with an embodiment disclosed herein;
FIGS. 22A and 22B are detailed views illustrating an embodiment of displaying (outputting) a moving path of an object in a panoramic image;
FIG. 23 is a view illustrating a displaying method when a moving path of an object is overlapped;
FIGS. 24A and 24B are views illustrating an operation of recording sounds generated from sound sources on a screen when a panoramic image is generated;
FIG. 25 is a view illustrating an operation of automatically recording sounds of a target to audio-capture while capturing a panoramic image;
FIGS. 26A and 26B are views of user settings for capturing a panoramic image;
FIGS. 27A and 27B are views illustrating an embodiment of an operation of selectively storing an object log and an audio zoom on a screen after capturing a panoramic image;
FIG. 28 is a view illustrating a panoramic image stored in a gallery;
FIG. 29 is an view of displaying a movement of an object using split views; and
FIG. 30 is a view illustrating an effect of a panorama capturing method of a mobile terminal in accordance with an embodiment disclosed herein.

### DETAILED DESCRIPTION OF THE EMBODIMENTS OF THE INVENTION

Description will now be given in detail of preferred configurations of mobile terminals according to an embodiment of the present invention, with reference to the accompanying drawings. Hereinafter, suffixes "module" and "unit or portion" for components used herein in description are merely provided only for facilitation of preparing this specification, and thus they are not granted a specific meaning or function. Hence, it should be noticed that "module" and "unit or portion" can be used together. In describing the present invention, moreover, the detailed description will be omitted when a specific description for publicly known technologies to which the invention pertains is judged to obscure the gist of the present invention. Also, it should be noted that the accompanying drawings are merely illustrated to easily explain the spirit of the invention, and therefore, they should not be construed to limit the spirit of the invention by the accompanying drawings.

Mobile terminals disclosed herein may be implemented using a variety of different types of terminals. Examples of such terminals include mobile terminals, such as mobile phones, smart phones, laptop computers, digital broadcast terminals, Personal Digital Assistants (PDA), Portable Multimedia Players (PMP), navigators, slate PCs, table PCs, ultrabooks, and the like, and stationary terminals, such as digital TVs, desktop computers and the like. The following description assumes that the terminal is a mobile terminal. However, it can be easily understood by those skilled in the art that the configuration according to the following description can be applied to the stationary terminals except for components particularly provided for mobility.

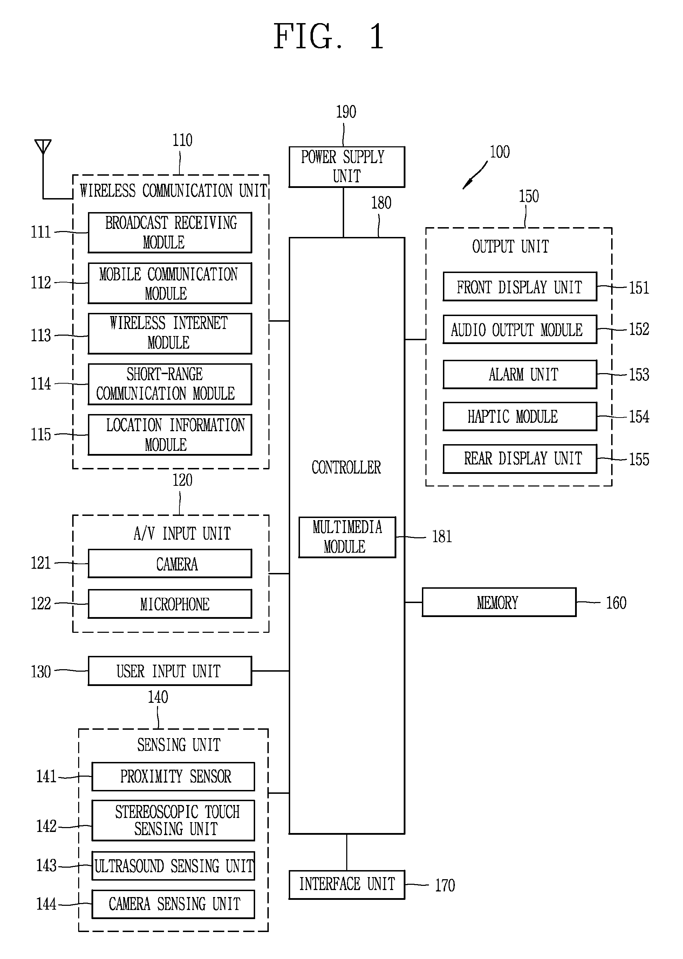

FIG. 1 is a block diagram of a mobile terminal in accordance with one embodiment of the present invention. The mobile terminal 100 may include components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network and in this instance, the broadcast associated information may be received by the mobile communication module 112.

The broadcast signal may exist in various forms. For example, it may exist in the form of an electronic program guide (EPG) of a digital multimedia broadcasting (DMB) system, an electronic service guide (ESG) of a digital video broadcast-handheld (DVB-H) system, and the like.

The broadcast receiving module 111 can receive a digital broadcast by using a digital broadcast system such as a multimedia broadcasting-terrestrial (DMB-T) system, a digital multimedia broadcasting-satellite (DMB-S) system, a data broadcasting system such as media forward link only (MediaFLO^{®}), a digital video broadcast-handheld (DVB-H) system, integrated services digital broadcast-terrestrial (ISDB-T), etc. The broadcast receiving module 111 can be configured to be suitable for additional broadcast systems that provide a broadcast signal as well as the above-mentioned digital broadcast systems. Broadcast signals and/or broadcast-associated information received via the broadcast receiving module 111 can be stored in the memory 160 (or another type of storage medium).

The mobile communication module 112 can transmit/receive wireless signals to/from at least one of network entities (e.g., base station, an external mobile terminal, a server, etc.) on a mobile communication network. Here, the wireless signals may include audio call signal, video call signal, or various formats of data according to transmission/reception of text/multimedia messages.

The mobile communication module 112 can implement a video (telephony) call mode and a voice call mode. The video call mode indicates a state of calling with watching a callee's image. The voice call mode indicates a state of calling without watching the callee's image. The wireless communication module 112 can transmit and receive at least one of voice and image in order to implement the video call mode and the voice call mode.

The wireless internet module 113 can support wireless Internet access for the mobile terminal. This module may be internally or externally coupled to the mobile terminal. Examples of such wireless Internet access may include Wireless LAN (WLAN), Wi-Fi, Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, Near Field Communication (NFC) and the like.

The location information module 115 denotes a module for detecting or calculating a position of the mobile terminal. An example of the location information module 115 may include a Global Position System (GPS) module or a Wi-Fi module.

Referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames can be displayed on a display 151.

The image frames processed by the camera 121 may be stored in the memory 160 or transmitted to the exterior via the wireless communication unit 110. Position information related to a user and the like may be extracted from the image frame obtained from the camera 121. Two or more cameras 121 may be provided according to the configuration of the mobile terminal.

The microphone 122 can receive an external audio signal via a microphone while the mobile terminal is in a particular mode, such as a phone call mode, a recording mode, a voice recognition mode, or the like. This audio signal is processed into electric audio data. The processed digital data is converted for output into a format transmittable to a mobile communication base station via the mobile communication module 112 when the phone call mode. The microphone 122 may include assorted noise removing algorithms to remove noise generated in the course of receiving the external audio signal.

The user input unit 130 can generate input data input by a user to control the operation of the mobile terminal. The user input unit 130 may include a keypad, a dome switch, a touchpad (e.g., static pressure/capacitance), a jog wheel, a jog switch and the like.

The sensing unit 140 may provide status measurements of various aspects of the mobile terminal. For instance, the sensing unit 140 can detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 can sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device, and the like.

The output unit 150 is configured to output an audio signal, a video signal or an alarm signal. The output unit 150 may include a front display unit 151, an audio output module 152, an alarm unit 154 and a rear display unit 155, and the like. The front display unit 151 can output information processed in the mobile terminal 100. For example, when the mobile terminal is operating in a phone call mode, the display unit 151 may provide a User Interface (UI) or a Graphic User Interface (GUI), which includes information associated with the call. As another example, if the mobile terminal is in a video call mode or a capture mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display and the like.

Some of such displays may be implemented as a transparent type or an optical transparent type through which the exterior is visible, which is referred to as a transparent display. A representative example of the transparent display may include a Transparent OLED (TOLED), or the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces. The rear display unit 155 includes similar characteristics as the front display unit 151.

The display unit 151 may also be implemented as a stereoscopic display unit 152 for displaying stereoscopic images. Here, the stereoscopic image may be a three-dimensional (3D) stereoscopic image. The 3D stereoscopic image refers to an image making a viewer feel that a gradual depth and reality of an object on a monitor or a screen is the same as a realistic space. The 3D stereoscopic image may be implemented by using binocular disparity. Binocular disparity refers to disparity made by the positions of two eyes. When two eyes view different 2D images, the images are transferred to the brain through the retina and combined in the brain to provide the perception of depth and reality sense.

Here, if the display unit 151 and a touch sensitive sensor (referred to as a 'touch sensor') have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 can sense which region of the display unit 151 has been touched.

Still referring to FIG. 1, a proximity sensor 141 may be arranged at an inner region of the mobile terminal covered by the touch screen, or near the touch screen. The proximity sensor 141 may be provided as one example of the sensing unit 140. The proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may have a longer lifespan and a more enhanced utility than a contact sensor.

The proximity sensor 141 may include a transmissive type photoelectric sensor, a direct reflective type photoelectric sensor, a mirror reflective type photoelectric sensor, a highfrequency oscillation proximity sensor, a capacitance type proximity sensor, a magnetic type proximity sensor, an infrared rays proximity sensor, and so on. When the touch screen is implemented as a capacitance type, proximity of a pointer to the touch screen may be sensed by changes of an electromagnetic field. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position will correspond to a position where the pointer faces perpendicular to the touch screen upon the proximity touch of the pointer.

The proximity sensor 141 may sense proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as a 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include the proximity sensor 141, a stereoscopic touch sensing unit 142, an ultrasonic sensing unit 143, and a camera sensing unit 144.

The proximity sensor 141 can detect the distance between a sensing object (for example, the user's finger or a stylus pen), applying a touch by using the force of electromagnetism or infrared rays without a mechanical contact, and a detect surface. By using the distance, the terminal may recognize which portion of a stereoscopic image has been touched. In particular, when the touch screen is an electrostatic touch screen, the degree of proximity of the sensing object may be detected based on a change of an electric field according to proximity of the sensing object, and a touch to the 3D image may be recognized by using the degree of proximity.

The stereoscopic touch sensing unit 142 can detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 can recognize position information relating to the sensing object by using ultrasonic waves. The ultrasonic sensing unit 143 may include, for example, an optical sensor and a plurality of ultrasonic sensors. The optical sensor may be configured to sense light and the ultrasonic sensors may be configured to sense ultrasonic waves. Since light is much faster than ultrasonic waves, a time for which the light reaches the optical sensor may be much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 may include at least one of the camera 121, a photo sensor, and a laser sensor. For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor may be configured to scan a movement of the sensing object in proximity to the touch screen. In more detail, the photo sensor may include photo diodes and transistors at rows and columns to scan content mounted on the photo sensor by using an electrical signal changing according to the quantity of applied light. Namely, the photo sensor may calculate the coordinates of the sensing object according to variation of light to thus obtain position information of the sensing object.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible output signals related to a particular function (e.g., a call signal reception sound, a message reception sound, etc.) performed by the mobile terminal 100. The audio output module 152 may include a receiver, a speaker, a buzzer or the like.

The alarm unit 153 may output a signal for informing about an occurrence of an event of the mobile terminal 100. Events generated in the mobile terminal, for example, may include call signal reception, message reception, key signal inputs, a touch input, etc. In addition to video or audio signals, the alarm unit 154 may output signals in a different manner, for example, using vibration to inform of an occurrence of an event. The video or audio signals may also be output via the display unit 151 and the audio output module 152. Hence, the display unit 151 and the audio output module 152 may be classified as parts of the alarm unit 153.

A haptic module 154 may generate various tactile effects that user may feel. A typical example of the tactile effect generated by the haptic module 154 is vibration. Strength, pattern and the like of the vibration generated by the haptic module 154 may be controllable by a user selection or setting of the controller. For example, different vibrations may be combined to be output or sequentially output.

Besides vibration, the haptic module 154 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 154 may be implemented to allow the user to feel a tactile effect through a muscle sensation such as the user's fingers or arm, as well as transferring the tactile effect through a direct contact. Two or more haptic modules 154 may be provided according to the configuration of the mobile terminal 100.

The memory 160 may store programs used for operations performed by the controller, or may temporarily store input and/or output data (for example, a phonebook, messages, still images, video, etc.). In addition, the memory 160 may store data regarding various patterns of vibrations and audio signals output when a touch input is sensed on the touch screen.

The memory 160 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 may serve as an interface with every external device connected with the mobile terminal 100. For example, the interface unit 170 may receive data transmitted from an external device, receive power to transfer to each element within the mobile terminal 100, or transmit internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The controller 180 can typically control the general operations of the mobile terminal 100. For example, the controller 180 can perform controlling and processing associated with voice calls, data communications, video calls, and the like. The controller 180 can include a multimedia module 181 for playbacking multimedia data. The multimedia module 181 may be configured within the controller 180 or may be configured to be separated from the controller 180.

The controller 180 can perform pattern recognition processing to recognize a handwriting input or a picture drawing input performed on the touch screen as characters or images, respectively. Also, the controller 180 can execute a lock state to restrict a user from inputting control commands for applications when a state of the mobile terminal meets a preset condition. Also, the controller 180 can control a lock screen displayed in the lock state based on a touch input sensed on the display unit 151 in the lock state of the mobile terminal.

The power supply unit 190 may receive external power or internal power and supply appropriate power required for operating respective elements and components under the control of the controller 180.

Various embodiments described herein may be implemented in a computer-readable or its similar medium using, for example, software, hardware, or any combination thereof. For a hardware implementation, the embodiments described herein may be implemented by using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electronic units designed to perform the functions described herein. In some cases, such embodiments may be implemented by the controller 180 itself.

For a software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

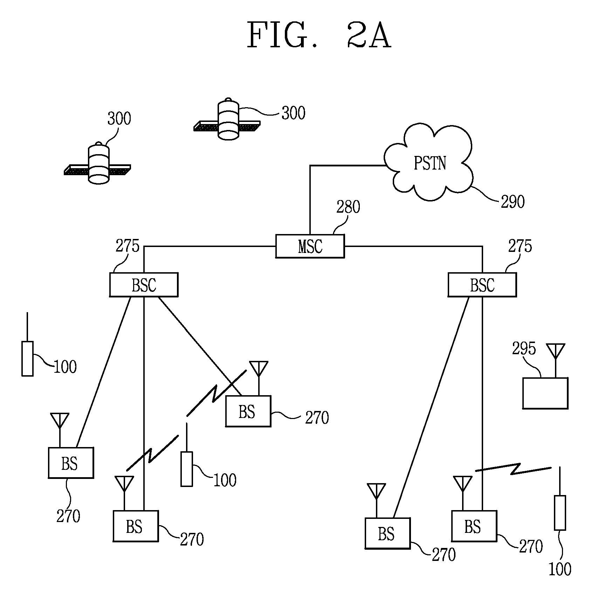

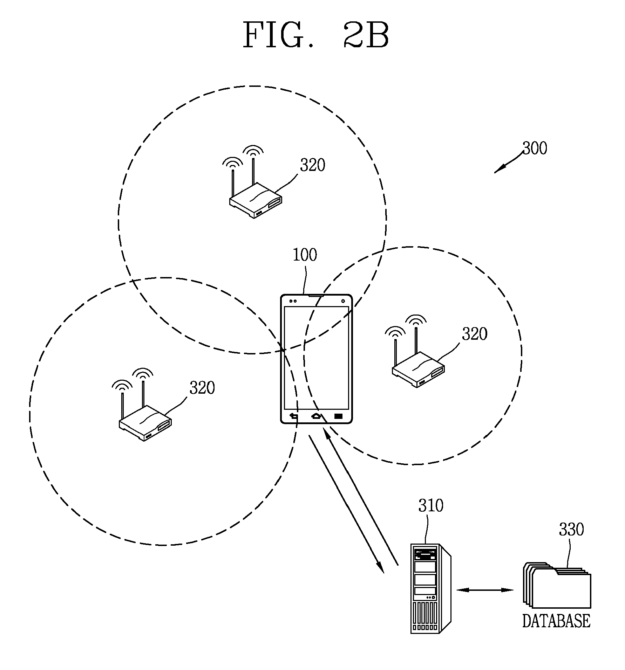

Hereinafter, description will be given of a communication system operable with a mobile terminal according to the present invention. FIGS. 2A and 2B are conceptual views of a communication system operable with a mobile terminal 100 disclosed herein.

First, referring to FIG. 2A, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2A, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2A.

Each base station 270 may include one or more sectors, each sector having an omni-directional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2A, transmits a broadcast signal to the mobile terminals 100 operating within the system. The broadcast receiving module 111

(FIG. 1) is typically configured inside the mobile terminal 100 to receive broadcast signals transmitted by the BT 295.

Referring to FIG. 2A, a broadcasting transmitter (BT) 295 may transmit a broadcast signal to terminals operating within the system. The broadcasting reception module 111 illustrated in FIG. 1 may be provided in the terminal for receiving the broadcasting signal transmitted from the BT 295.

FIG. 2A further depicts several Global Positioning System (GPS) satellites 300. Such satellites 300 facilitate locating the position of at least one of plural mobile terminals 100. Two satellites are depicted in FIG. 2A, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270.

The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

The Wi-Fi positioning system (WPS) 300 refers to a location determination technology based on a wireless local area network (WLAN) using Wi-Fi as a technology for tracking the location of the mobile terminal 100 using a Wi-Fi module provided in the mobile terminal 100 and a wireless access point (AP) 320 for transmitting and receiving to and from the Wi-Fi module.

The Wi-Fi positioning system 300 may include a Wi-Fi location determination server 310, a mobile terminal 100, a wireless access point (AP) 320 connected to the mobile terminal 100, and a database 330 stored with any wireless AP information.

The Wi-Fi location determination server 310 may extract the information of the wireless AP 320 connected to the mobile terminal 100 based on a location information request message (or signal) of the mobile terminal 100. Information related to the wireless AP 320 may be transmitted to the Wi-Fi location determination server 310 through the mobile terminal 100 or transmitted to the Wi-Fi location determination server 310 from the wireless AP 320.

The information related to the wireless AP extracted based on the location information request message of the mobile terminal 100 may be at least one of MAC address, SSID, RSSI, channel information, privacy, network type, signal strength and noise strength.

The Wi-Fi location determination server 310 may receive the information of the wireless AP 320 connected to the mobile terminal 100 as described above, and compare the received wireless AP 320 information with information contained in the pre-established database 330 to extract (or analyze) the location information of the mobile terminal 100.

Further, referring to FIG. 2B, as an example, wireless APs connected to the mobile terminal 100 are illustrated as first, second, and third wireless APs 320. However, the number of wireless APs connected to the mobile terminal 100 may be changed in various ways according to a wireless communication environment in which the mobile terminal 100 is located. When the mobile terminal 100 is connected to at least one of wireless APs, the Wi-Fi positioning system 300 can track the location of the mobile terminal 100.

Next, considering the database 330 stored with any wireless AP information in more detail, various information related to any wireless APs disposed at different locations may be stored in the database 330.

The information related to any wireless APs stored in the database 330 may be information such as MAC address, SSID, RSSI, channel information, privacy, network type, latitude and longitude coordinates of the wireless AP, building at which the wireless AP is located, floor number, detailed indoor location information (GPS coordinates available), AP owner's address, phone number, and the like.

Thus, any wireless AP information and location information corresponding to the any wireless AP may be stored together in the database 330, and thus the Wi-Fi location determination server 310 may retrieve wireless AP information corresponding to the information related to the wireless AP 320 connected to the mobile terminal 100 from the database 330 and extract the location information matched to the retrieved wireless AP, thereby extracting the location information of the mobile terminal 100.

Furthermore, the extracted location information of the mobile terminal 100 may be transmitted to the mobile terminal 100 through the Wi-Fi location determination server 310, thereby acquiring the location information of the mobile terminal 100.

In addition, regarding the camera 121, a panorama is method of capturing a wide space, which cannot be put into one screen, with moving camera views. One embodiment of the present invention generates a virtual reality (VR) panoramic image including an entire moving path of an object in a VR panorama mode, by creating a panoramic image as a background and continuously capturing the moving path of the object to output on the background.

That is, the background is captured once per each preview and the moving path is captured in each preview by a preset number of times so as to be displayed on the background. In other words, one embodiment of the present invention realizes a panoramic image using the movement of the object captured in the plurality of continuous camera views.

One embodiment of the present invention also provides a method for allowing a user to automatically capture a guide region, which is set as a subsequent preview, by providing a capture guide along an object (an object to be captured) when a moving path of the object is captured.

Further, the guide may include a capture guide or a capture indicator. The guide direction corresponds to a moving direction of the object. A description disclosed herein assumes the user moves a camera along the guide direction. Therefore, the user can continuously capture the object by moving the camera along the guide, so as to acquire a panoramic image, which includes an entire moving path of the object, specifically, a 360°-movement of the object.

### Displaying of object guide and capture guide

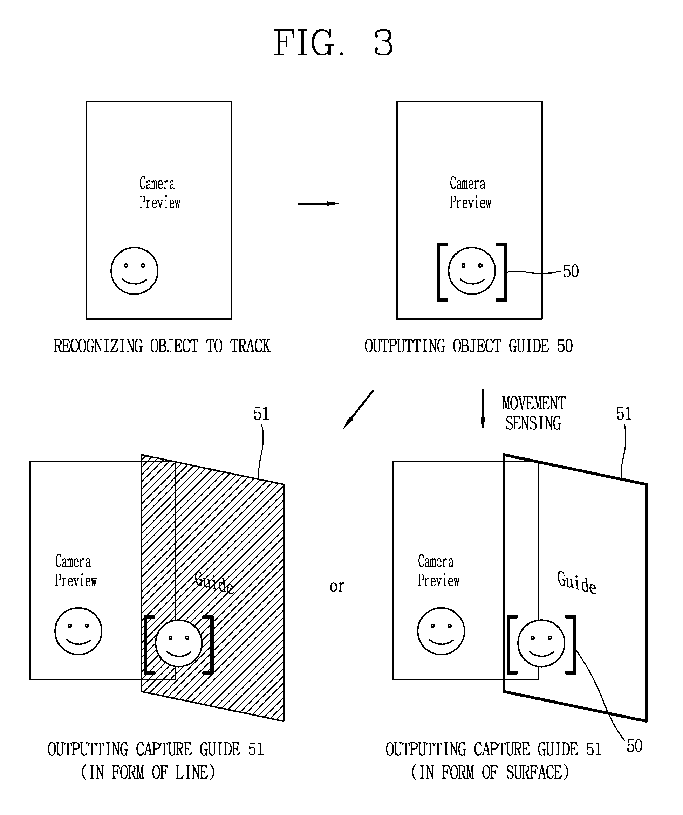

FIG. 3 is a view of an embodiment of providing a capture guide in accordance with the present invention. As illustrated in FIG. 3, in a panorama mode, the controller 180 can recognize an object, whose moving path is to be tracked, in a camera preview. Also, a user may select a specific object in the camera preview. The panorama mode refers to a general panorama mode when there is no object, and a VR panorama mode when there is an object to track.

Once the object to track is recognized or selected, controller 180 can operate a tracking focus with respect to the corresponding object, and output an object guide 50 (or an indicator), for example, an object guide in a form of "[]" to the recognized object.

The object guide 50 is an indicator indicating that the corresponding object is the target to track, and may be output to at least one object. The object guide 50 may be output distinctively for each object, and provided in various forms (shapes or sizes).

Afterwards, when the object moves, N sheets (about 3 to 6 sheets) of photos (images) may be captured per second within a preview, thereby collecting movement information related to the corresponding object (changes of the object). Here, the determination of the movement of the object may be performed by, for example, using a rotation vector matrix difference or using object overlapping (or object replication).

That is, the controller 180 can determine that the corresponding object has moved when an angle of a central point of the object is changed based on a center of a preview region, or when a previous object and a current object are not overlapped or overlapped by more than a predetermined level.

When the object moves away from a center of a current preview region by more than a predetermined distance, the controller 180 can predict a moving direction of the object and display a capture guide (or guide region) 51 for guiding a user to move the camera (or terminal) toward the corresponding direction (moving the camera view).

The capture guide 51 can guide a capturing direction and a capturing region. The capture guide 51 may basically have the same shape (e.g., a rectangle) as the preview (upon a horizontal movement of the camera), and be output in a slightly inclined rectangular shape when the user moves the camera in a vertical direction or in a horizontal-vertical direction (horizontal+vertical).

The capture guide 51 can partially overlap the camera preview such that a continuous panoramic image can be generated. The capture guide 51 may be output in a linear form or a surface (or plate) form (fill rect) to help the user's easy recognition. The user can thus continuously capture the corresponding object by moving the camera to the region indicated (or guided) by the capture guide 51, thereby creating a panoramic image including the entire moving path of the object.

### Various shapes of object guide

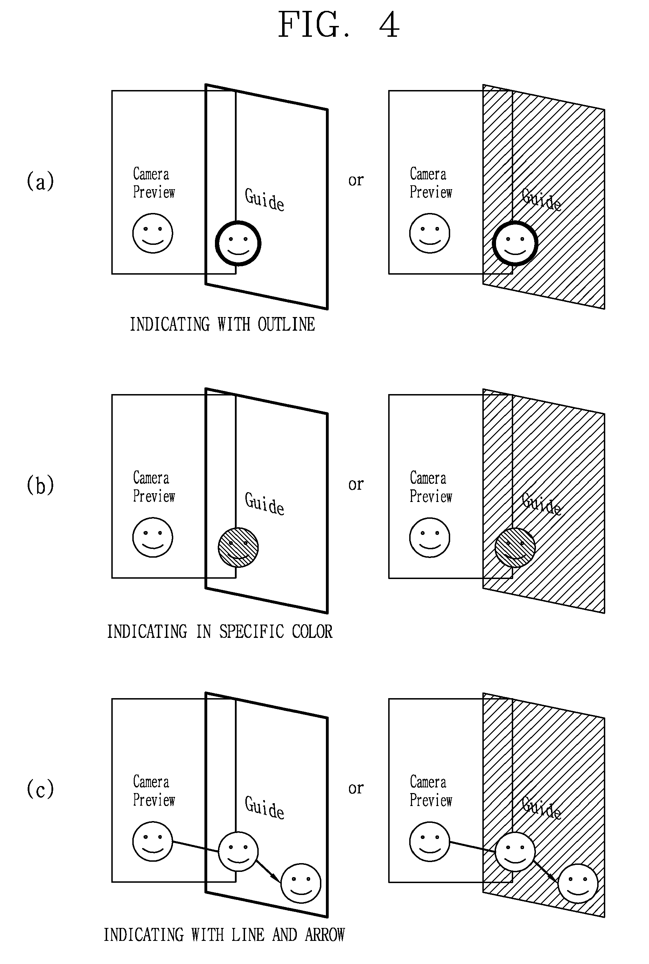

FIGS. 4(a) to 4(f) are views illustrating examples of various shapes (or forms) of an object guide. As illustrated in FIGS. 4(a) and 4(b), a capture guide can be provided in a linear or surface (fill rect) form, and various object guides can be tagged along with an object to track. A form (shape and size) of the object guide can be selectively set using a user menu.

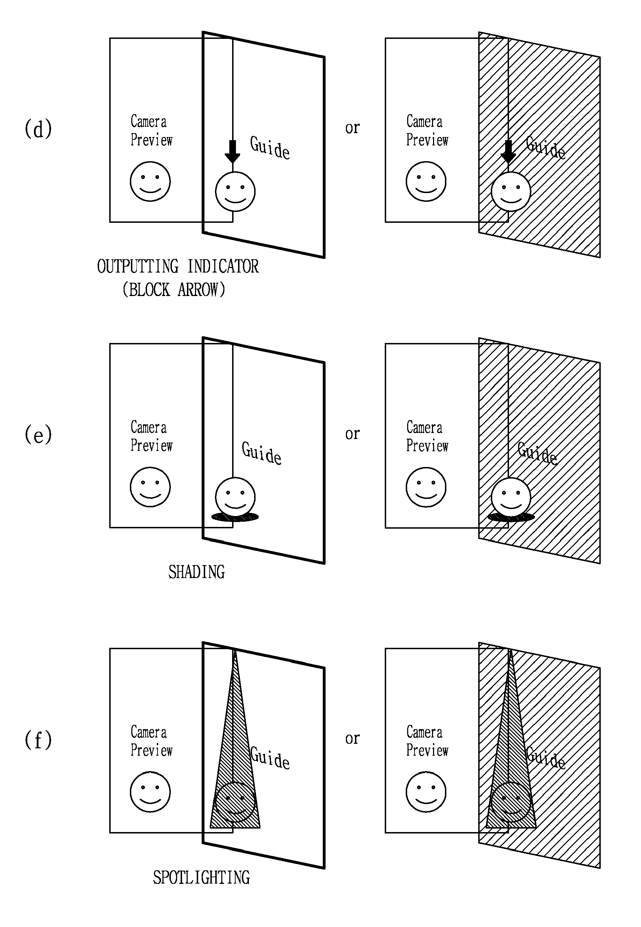

That is, the controller 180 can indicate an object, which is currently tracked, with an outline (see FIG. 4(a)) or in a specific color (see FIG. 4(b)) according to a user setting. In other examples, the controller 180 can indicate the object, which is tracked, with a line and an arrow (see FIG. 4(c)), with an indicator ('block arrow') (see FIG. 4(d)), with a shadow (see FIG. 4(e)), or in a spotlighting manner (see FIG. 4(f)). The present invention is not limited to those examples, but also employs various emphasizing and distinguishing manners for indicating an object which is tracked.

### Display form of capture guide (guide region)

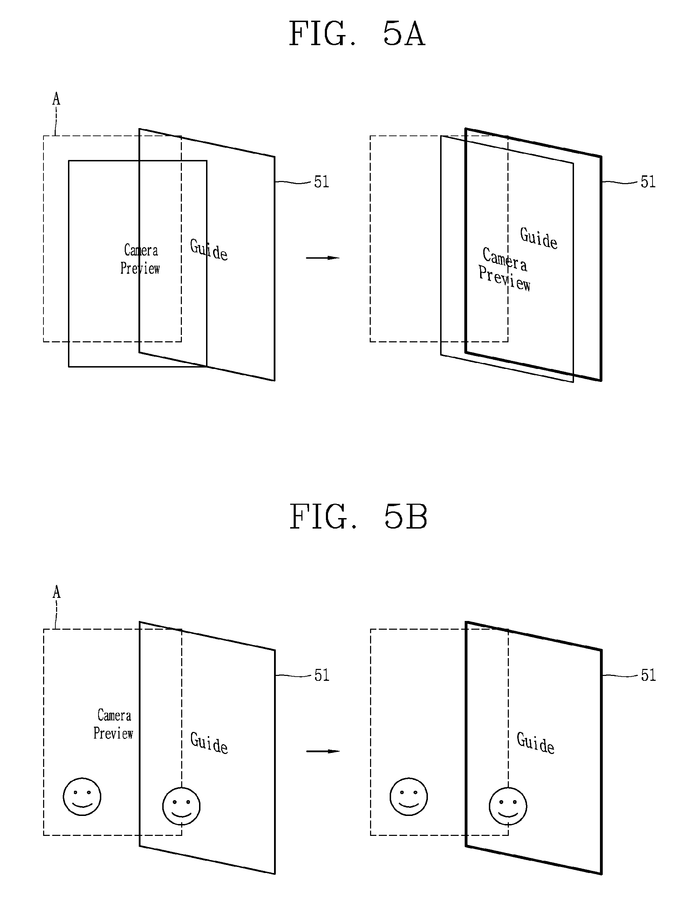

FIGS. 5A and 5B are views illustrating examples of a display (output, indication) form of a capture guide. As illustrated in FIG. 5, the capture guide (guide region) 51 disclosed herein can be more clearly output (displayed) as the user moves the camera closer to the capture guide 51 from a previous camera preview which is indicated in a dotted line.

For example, assuming that a distance from a previous preview A to a new capture guide region 51 is 100, as the preview A approaches the new capture guide region 51, the guide region 51 may become clearer (a transparency value is reduced).

FIG. 5A illustrates an example that an outline of the preview A and an outline of the guide region 51 are merely displayed without outputting an object such that a user can concentrate on those outlines, and FIG. 5B illustrates an example that only the object and the guide region 51 are displayed such that the user can concentrate on the object and the guide region 51.

Hence, by adjusting the sharpness of the capture guide, the user can have the feeling that the camera "moves near the capture guide," namely, "capturing is about to start." This is because the capturing is started when the camera preview substantially matches or is aligned with the guide region within a predetermined distance or amount. For example, the camera preview image can overlap with the displayed captured guide when the user moves the terminal. The panoramic image can then be captured.

### Selection of object (target) to track

An object whose moving path is to be tracked may be selected directly by a user in a preview screen. In another example, the controller can perform automatic selection of an object to track based on a user's movement without a user's touch input.

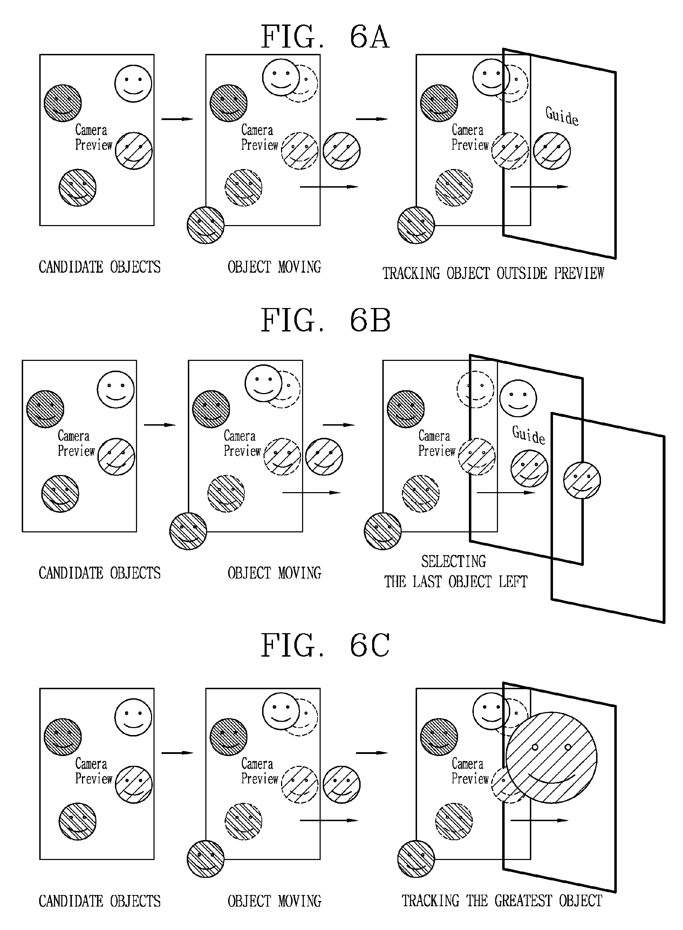

In particular, FIG. 6 is a view illustrating an example of automatically selecting an object to track down in accordance with an embodiment of the present invention. As illustrated in FIG. 6, a user can select candidate objects whose logs (moving paths) are to be output by displaying at least one object in a preview (a camera preview or a preview screen) prior to starting the tracking. Here, each candidate may be indicated in a different color. An object which is indicated with a dotted line may be an object before it moved (a previous object).

In this state, when objects move in individual directions and the user tracks an object which moves out of the preview, as illustrated in FIG. 6A, the controller 180 can automatically select the object in the corresponding direction as an object to track. If there is more than one object in the tracked direction, they can all be selected as the object to track.

In another example, referring to FIG. 6B, when only one object is left in the last scene captured by the user, the controller 180 can consider that the user is interested in the corresponding object and leave only the object on the full photo. In another example, referring to FIG. 6C, when one object has moved forward in the moving direction and increases in size, if the size-increased object obscures other objects, the controller 180 can automatically track the biggest object.

### Display form of target (object) to track

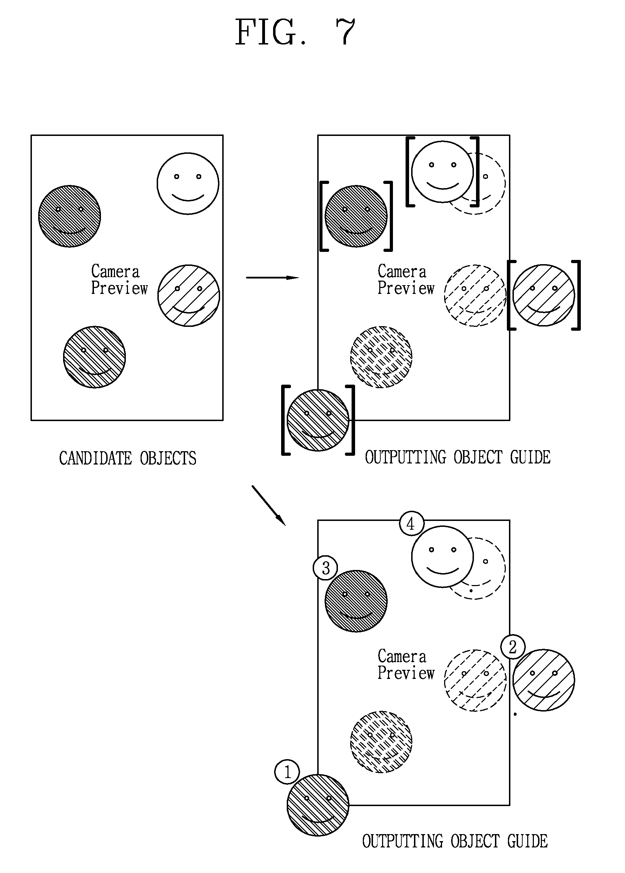

FIG. 7 is a view illustrating an example of indicating an object designated as a target to track. Once a target to track is selected, the controller 180 can output an object guide with respect to each object. The object guide may be output (displayed, indicated) in the manner of using "[]", using an outline, outputting a moving path, using a color, shading, or spotlighting, as illustrated in FIGS. 4(a) to 4(f), or providing numbers as illustrated in FIG. 7.

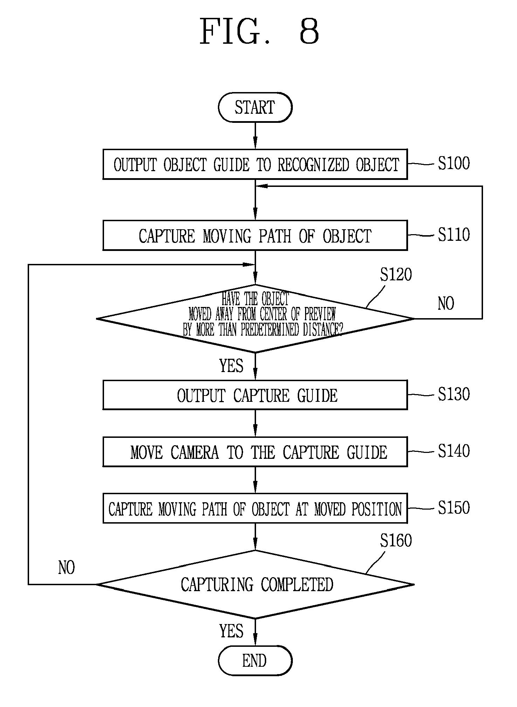

Next, FIG. 8 is a flowchart illustrating a panoramic image generating method in a mobile terminal in accordance with an embodiment disclosed herein. As illustrated in FIG. 8, when an object to track is selected in a preview, the controller 180 can display an object guide indicating that the corresponding object (target) to track has been selected (S100).

When the object moves, the controller 180 can continuously capture the object within a current preview (S110). The continuous capturing may be performed by capturing N sheets (about 3 to 6 sheets) of images per second, and the captured images may be stored in the memory 160.

The controller 180 can check whether the object has moved away from a center of the preview by more than a predetermined distance (S120). When the object has moved by more than the predetermined distance (Yes in S120), the controller 180 can display a capture guide (guide region) in an object-moving direction (S130). The capture guide may be displayed immediately when the object moves away by the predetermined distance, or gradually displayed according to a moving distance of the object.

The user can move the camera preview to be aligned with the capture guide (guide region), in response to the movement of the object (S140). When the preview is aligned with the capture guide, the controller 180 can capture a background in the corresponding preview again, and continuously capture the corresponding object (3 to 6 sheets per second).

Accordingly, the user can align the preview with the capture guide (guide region) guiding the capturing of the object according to the movement of the object, and execute the continuous capturing with respect to the object (S150). Afterwards, when the capturing for the object is completed, a panoramic image including the entire moving path of the object may be obtained (S160).

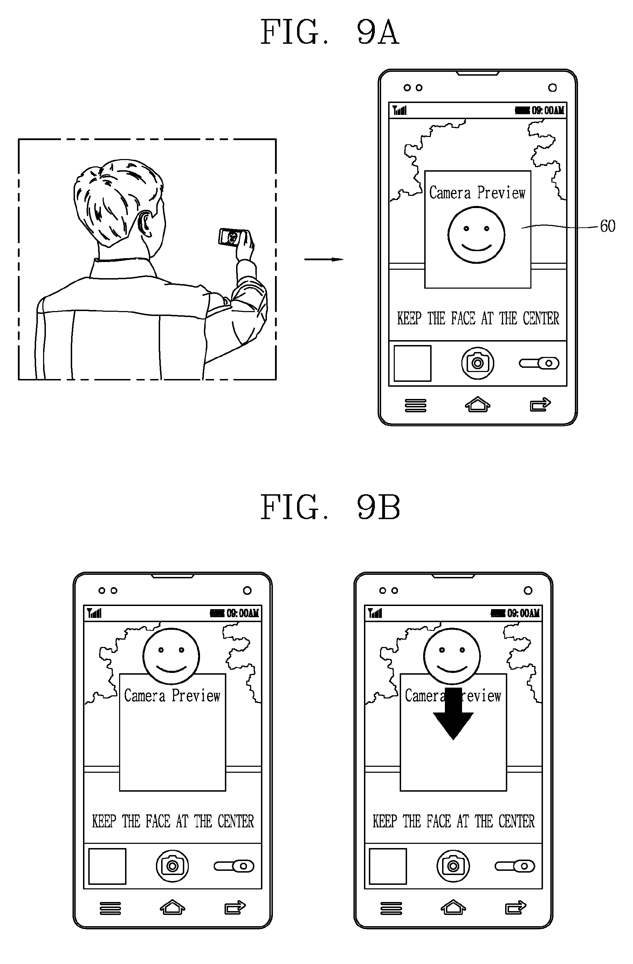

Next, FIGS. 9A and 9B are views illustrating an embodiment of a method for adjusting a capture posture upon capturing a panoramic image. It is preferable to allow a terminal to move at a predetermined height in order to stably capture a VR panoramic image. If dual recording is used, a front camera may be simultaneously used with a rear camera.

Therefore, in an embodiment of the present invention, upon setting a VR panorama mode, as illustrated in FIG. 9A, a posture guide 60 can be displayed on a screen such that the user can execute capturing at a predetermined height. The posture guide 60 may be composed of a portion for displaying a face, and a guide message, for example, "keep the face at the center."

As illustrated in FIG. 9B, when the terminal which the user is grabbing is moved downward during panorama capturing, the face is relatively moved up. Accordingly, the user can be guided to bring his face to the center by use of a block arrow or the like. Specifically, the controller 180 can recognize the face when the user rotates the terminal by 360°, to guide the user to maintain the terminal horizontally and vertically.

Therefore, upon executing the panorama capturing using the posture guide 60, the user can always perform the capturing in a right posture, which results in obtaining a panoramic image with improved quality. Hereinafter, description will be given in more detail of an operation of capturing an object along its moving path, generating a panoramic image, and displaying the generated panoramic image.

### Storage and output of moving path (log)

When an object to track is recognized, the controller 180 can store changes of the object by storing (capturing) N sheets (about 3 to 6 sheets) of photos (images) of the object per second in a preview. Here, a background may be captured only when a new preview is displayed, and a moving path of the object may be continuously captured within the preview so as to be displayed on the background.

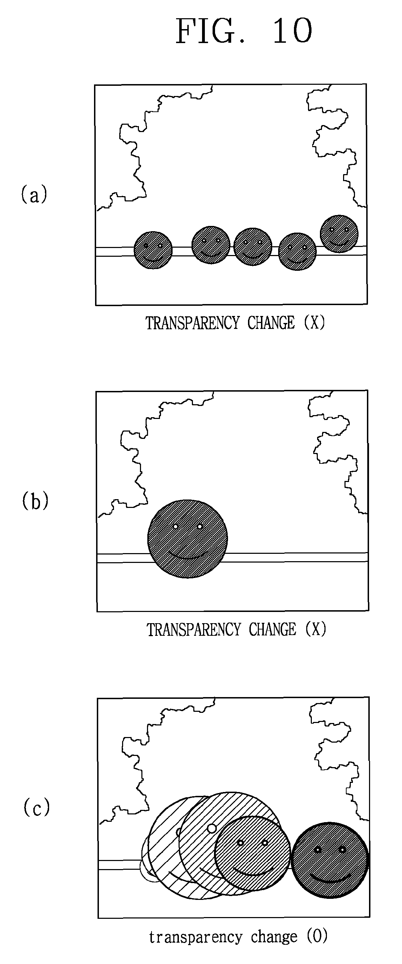

In particular, FIGS. 10(a) to 10(c) are views illustrating an operation of collecting and displaying movement information related to an object according to a size variation (size change) and a moving path of the object. The controller 180 can recognize an object and collect movement information related to the object by storing N sheets (about 3 to 6 sheets) of images of the object per second. That is, since the VR panorama capturing is a capturing using previews, N sheets of photos of the object per second are collected as movement information (log) after recognizing the object.

When the object moves horizontally and vertically with less changing in size, as illustrated in FIG. 10(a), the controller 180 can output a log without change of transparency of the object. When the object changes less in size and moves less as shown in FIG. 10(b), the controller 180 can output the best shot or the last image of a corresponding position as a log. Here, the change in size of the object may indicate a situation that the object approaches or recedes.

Also, as illustrated in FIG. 10(c), when the object greatly changes in size, the controller 180 can output a log by changing transparency of the object. If the movement of the object is overlapped so as to generate an overlapped region, the transparency of the object may be adjusted to 30 %.

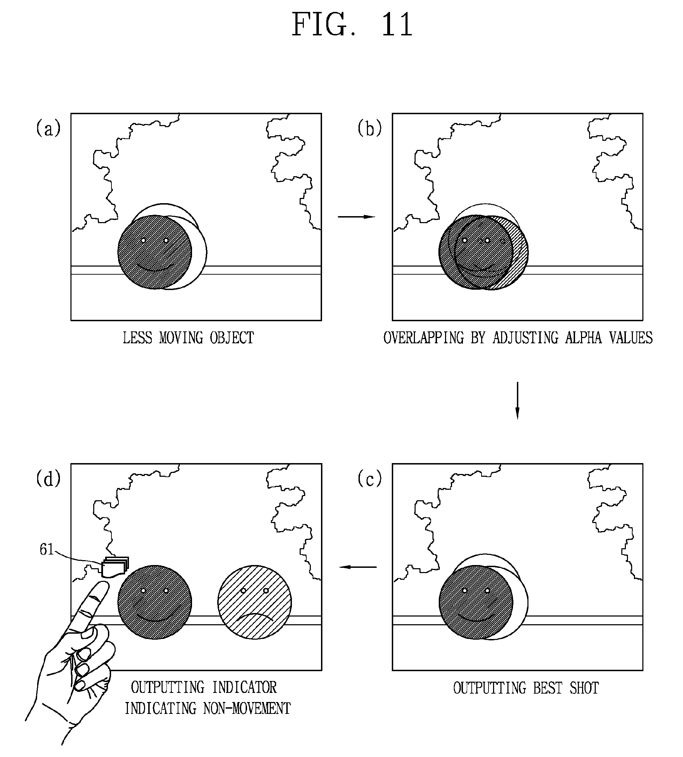

Next, FIG. 11 is a view illustrating an example of displaying a moving path of an object which moves less. If there is no great movement of the object for more than N sheets of photos captured, then the controller 180 can overlay those photos by adjusting an alpha value of each photo into 100/N, and display the best shot on the front. Alternatively, the controller 180 can display the last shot on the front, and attach the other photos to the rear without adjustment of the alpha value.

Further, the controller 180 can display those shots by sorting into shots with movement and shots without movement. That is, if the object rarely moves, the controller 180 can display the best shot or last shot and output an indicator 61, which indicates that any movement has not occurred, directly on the best or last shot. Afterwards, the controller 180 can display shots with the movement next the best or last shot. The user can thus select the indicator 61 so as to view another shot.

While VR panorama capturing is performed, if an object (target to track) moves fast, the object is not captured in the corresponding section. It is also difficult to know a moving direction of the object within the section in which the object moves fast. Consequently, a moving path of the object can be incomplete. Therefore, one embodiment of the present invention provides a method for generating a natural panoramic image by efficiently filling a non-captured portion, which is caused due to a fast movement of an object.

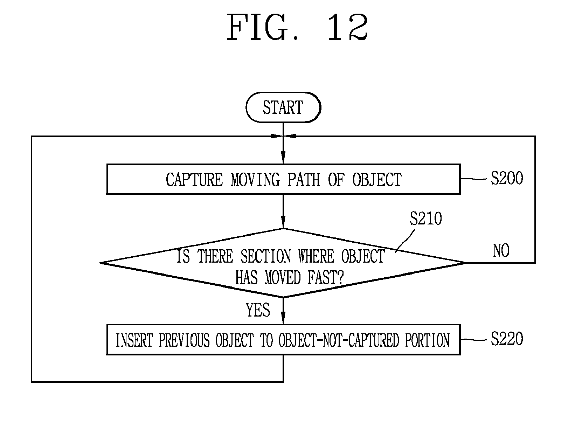

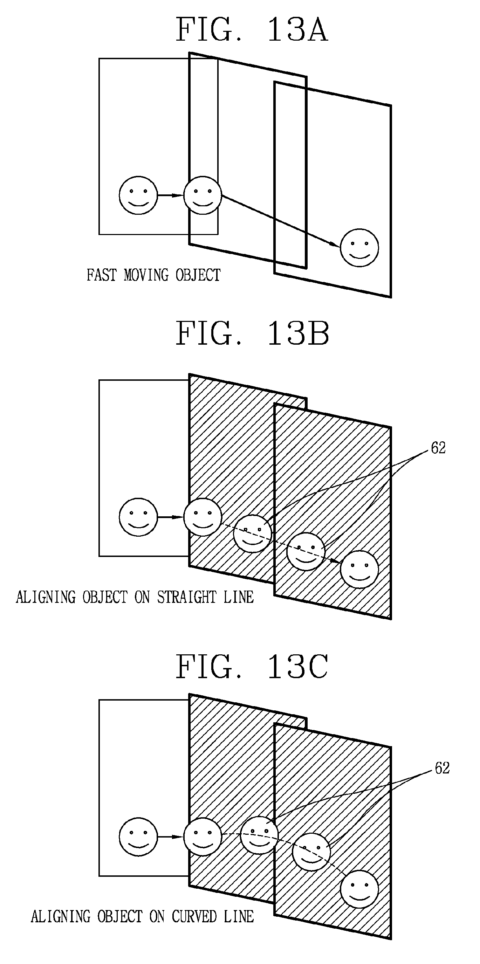

In particular, FIG. 12 is a flowchart illustrating an operation of filling a non-captured portion upon capturing a moving path of an object, and FIGS. 13A to 13C are detailed views of FIG. 12. If an object (target to track) moves fast within a predetermined section, the object is not captured in the corresponding section. Furthermore, because it is difficult to know a moving direction of the object within the section, a moving path of the object is also incomplete.

The controller 180 can determine whether or not an object (target to track) which is being currently tracked has moved fast based on a movement of a camera (terminal) while capturing a moving path of the object (S200 and S210). The determination of the movement speed of the object may be performed based on an average speed that a user currently moves the camera. The controller 180 can recognize that the object has moved fast if the camera moves faster than the average speed.

In another example, the controller 180 can consider that the object fast moves when the collected moving path (log) of the object is spaced by a predetermined distance, and determine that the object rarely moves when the moving path has an overlapped portion.

When it is determined (recognized) that the corresponding object has fast moved in a predetermined section, the controller 180 can insert a previous object 62 into the moving path by each predetermined interval, and process the inserted object to be distinguished over an actually-captured object (S220).

That is, as illustrated in FIG. 13A, when the object fast moves in the predetermined section in a different direction from a previous direction, the controller 180 cannot recognize the exact moving direction of the object. In this instance, the controller 180 can consider the moving direction of the object as a straight line, as illustrated in FIG. 13A. Accordingly, as illustrated in FIG. 13B, the controller 180 can insert the previous object 62 by each predetermined interval, and process the inserted object 62 to be semitransparent or be in a different color such that the inserted object 62 can be distinguished from the actually-captured object (S220).

In another example, as illustrated in FIG. 13C, the controller 180 can consider the moving direction of the object as a curved line and insert the previous object 62 by each predetermined interval. The controller 180 can then process the inserted object 62 to be semitransparent or be in a different color such that the inserted object 62 can be distinguished from the actually-captured object. That is, this example illustrates that a movement vector of the object is indicated in a curved line in addition to a straight line, which can provide an effect of obtaining a natural panoramic image even when the object fast moves.

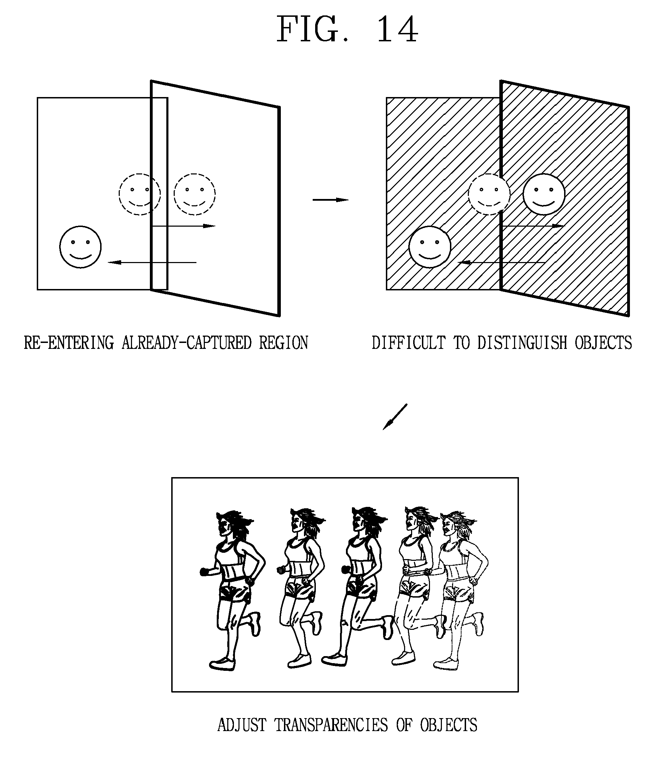

Next, FIG. 14 is an view illustrating an image processing method when an object moves back to an already-captured region during movement. That is, objects can move in different directions. Hence, when some objects move back into an already-captured region, time-based distinction is difficult. That is, a shot of an object which has come back into an already-captured region is overlapped or replicated by a shot which has been captured in a previous capturing area (preview). This makes it difficult to distinguish the shots from each other.

One embodiment of the present invention addresses this problem by adjusting transparencies of objects. That is, when an object which is currently tracked moves back into a previously-captured region, the controller 180 can indicate the corresponding object and a previously-captured object by using different transparencies.

For example, the transparencies can be adjusted such that the previous object is more blurred than the current object (blurred by 20 %). Specifically, considering visibility, the controller 180 can prevent transparency of an object from being lowered below a predetermined range (e.g., 20%) upon the adjustment of the transparency. Therefore, referring to FIG. 14, when several sheets of photos are shot, a photo indicated in a darker color may correspond to the last position.

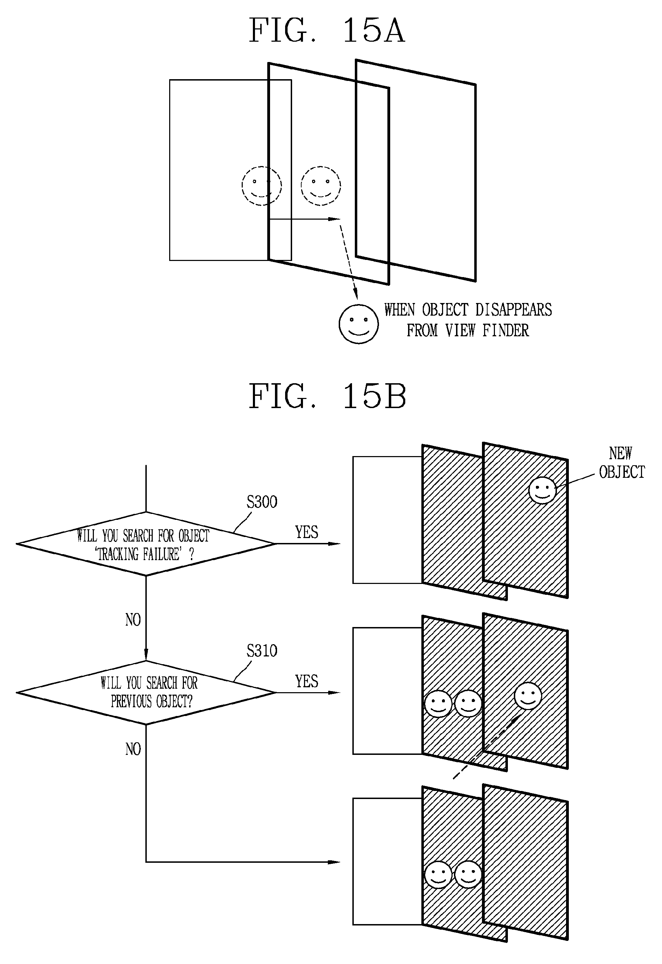

Next, FIGS. 15A and 15B are views illustrating a processing method when an object moves different from an expected direction. As illustrated in FIG. 15A, while a user tracks a moving path of an object, if the object suddenly disappears from a view finder, the object may be invisible in a preview (capturing region). When the object is invisible in the capturing region, as illustrated in FIG. 15B, the controller 180 can notify the failure of the object tracking, and output a message for checking whether to track a new object or keep tracking the previous object (S300 and S310).

If the user wants to track a new object, the controller 180 can remove only the tracked object from the captured photo and search for a new object at a current position. Further, if the user wants to search for the previous object, the controller 180 can store the already-captured region and indicate the user to move a camera toward the object.

When the user has moved the camera and searched for the corresponding object, then the controller 180 can execute capturing, starting from the corresponding position. However, if the user does not want to track a new object or the previous object any more, the controller 180 can stop the capturing at the corresponding position and store the captured region.

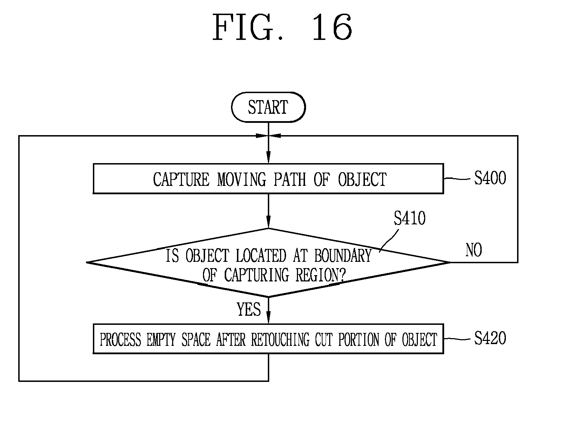

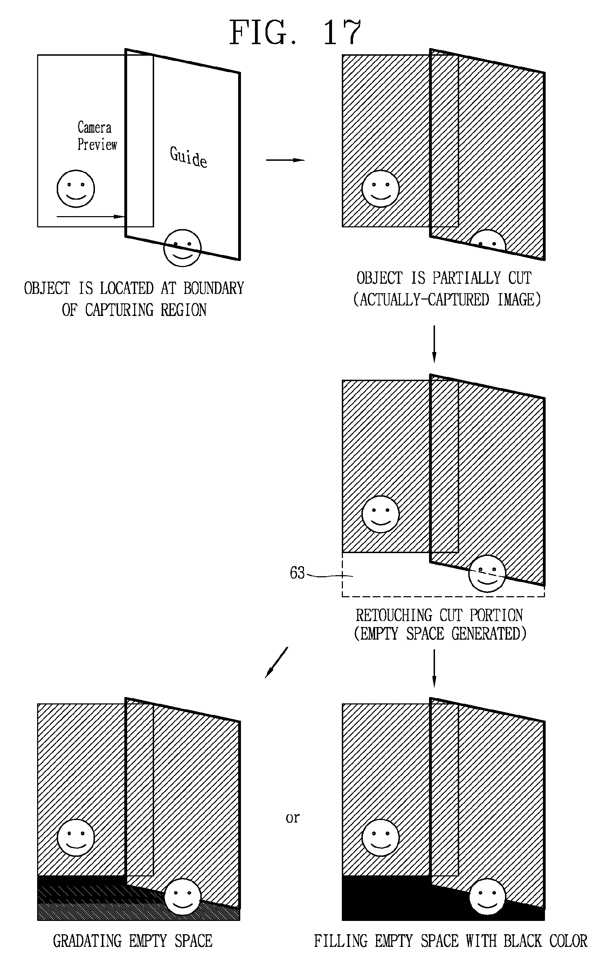

FIG. 16 is a flowchart illustrating an image processing method when an object is located at a boundary of a capturing area, and FIG. 17 is a detailed view of FIG. 16. As illustrated in FIGS. 16 and 17, if an object is captured while located at an edge (boundary) of a captured region, a part of the object may be cut off.

To solve the cutting of the object, one embodiment of the present invention allows for object retouching of selecting a cut portion from the most recently-captured (previous) full object and inserting the cut portion. When the cut portion is retouched and when creating a rectangular photo, an empty space 63 may be generated at the corresponding portion. Therefore, the controller 180 can fill the empty space 63 with a black color, or fill a color of an end portion of the capturing region in a gradation manner.

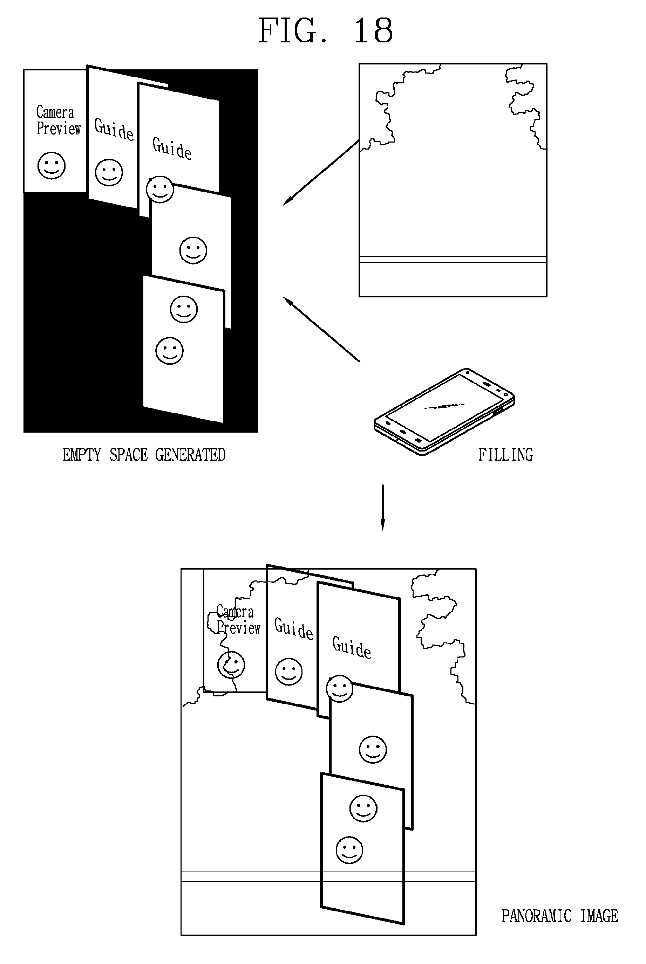

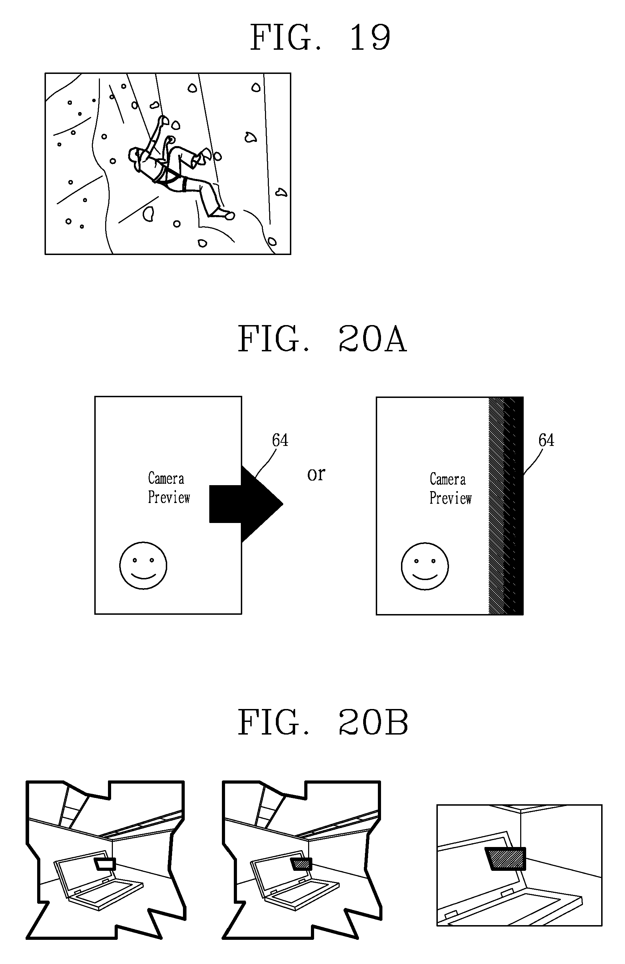

FIG. 18 is a view illustrating another embodiment of creating a panoramic image using a moving path of a tracked object, and FIG. 19 is a view illustrating a useful scenario of FIG. 18. While capturing an object along its movement, there may be an environment around the object that is not fully captured. Therefore, if a panoramic image is produced into a rectangular shape after tracking a moving path of the object, an empty space, such as a black portion in FIG. 18, may be generated.

Accordingly, one embodiment of the present invention uses a method of filling an empty space with an image (e.g., a photo) captured at the same position using GPS information. The image to fill the empty space may be downloaded from a web (e.g., Google, SNS, etc.), or be an image stored in the memory 160. Here, the position of the object may be guessed from a background of the captured image, or obtained using compass information related to the object upon the capturing.

That is, referring to FIG. 19, during rock-climbing, a person moves in various directions (horizontally and vertically). In order to include an image of the person in a screen, such scene should be captured at a far distance. As such, in order to view a full image in a mountainous or indoor environment, a capturing distance should be considerably distant. However, it is difficult to ensure such distance under the environment. However, if using the example illustrated in FIG. 18, the user can capture a wide rock and a climbing root at a close distance.

Therefore, the imaging method as illustrated in the example may not be limited to filling of the empty space, but also be applied to a method of inserting a non-captured object in a 360°-captured image (or photo). The example may be usefully applied when capturing an object, which frequently changes in moving direction and has a great changing angle.

FIGS. 20A and 20B are views illustrating an embodiment of inducing a camera to move to an empty space while capturing a VR panoramic image. When capturing an object by 360° while tracking a moving path of the object, there may be an empty space without being captured. In this instance, as illustrated in FIG. 20A, the controller 180 can output an indicator 64 indicating the empty space in a preview, such that the user can induce the camera to move to the corresponding direction. The indicator may be represented as an arrow or in a gradation manner.

When the camera is moved to the direction indicated by the indicator, as illustrated in FIG. 20B, the controller 180 can emphasize the empty space, by using an outline, a color, a zooming effect, and the like, such that the user can easily find the non-captured empty space.

### Showing (reproduction) of object-moving path

There are required various methods for viewing a moving path of an object when viewing a captured VR panoramic image in a full screen. This is because the number of objects is likely to be more than one and each object moves in a different direction and at a different speed.

When there are a plurality of objects to track a path thereof, those paths may be displayed on the object basis in a splitting manner. In this instance, the path of each object may be distinctively displayed by adjusting a color or transparency in the sequence of time. Specifically, when those paths are overlapped, the latest path may be displayed earlier or the last.

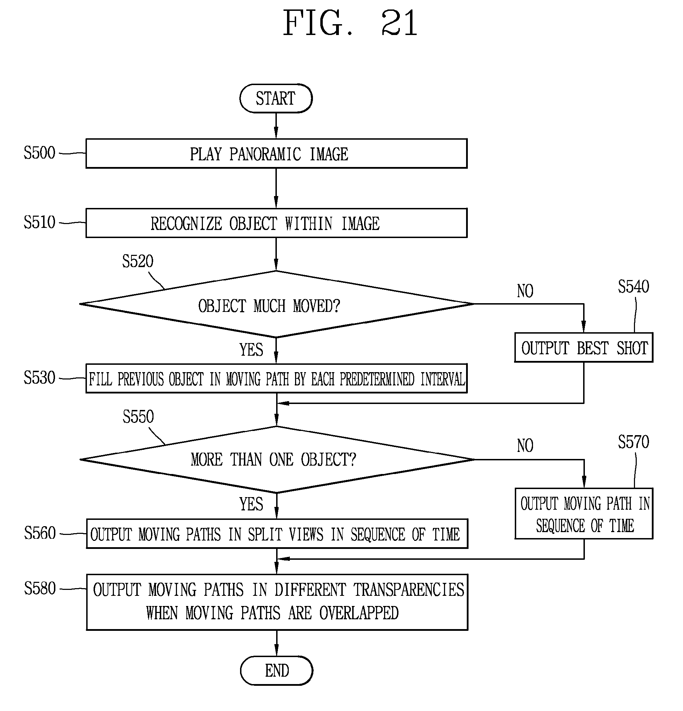

FIG. 21 is a flowchart illustrating an operation of reproducing a panoramic image in accordance with an embodiment disclosed herein. As illustrated in FIG. 21, when a reproduction (playback) of a panoramic image is selected, the controller 180 can recognize an object included in a captured panoramic image, in more detail, an object whose moving path has been tracked (S500 and S510).

The controller 180 can then check whether the recognized object has moved much (moved fast) (S520). If the object has moved fast (Yes in S520), the controller 180 can fill a previous object in the moving path (S530). Further, if the object has moved less (No in S520), the controller 180 can output a best shot (S540).

Also, the controller 180 can check whether there is only one recognized object (S550). If at least one object has been recognized (Yes in S550), the controller 180 can split a screen and display a moving path of each object in each split view according to the sequence of time (S560). If only one object has been recognized (No in S550), the controller 180 can display the moving path of the one object in a single view according to the sequence of time (S570).

Specifically, upon displaying in a split view or a single view, if moving paths of objects are overlapped, the controller 180 can differently adjust transparencies thereof for output. For example, the controller 180 can control the last-captured object to be displayed in a darker color (S580).

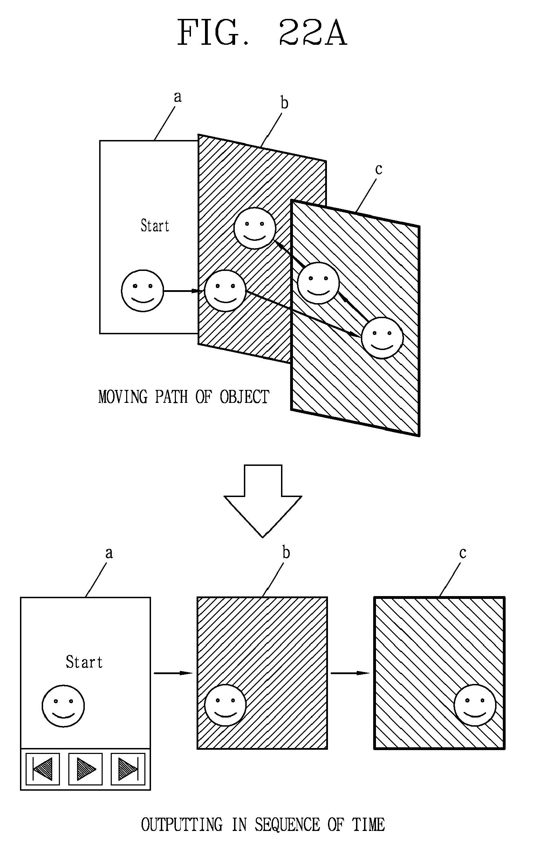

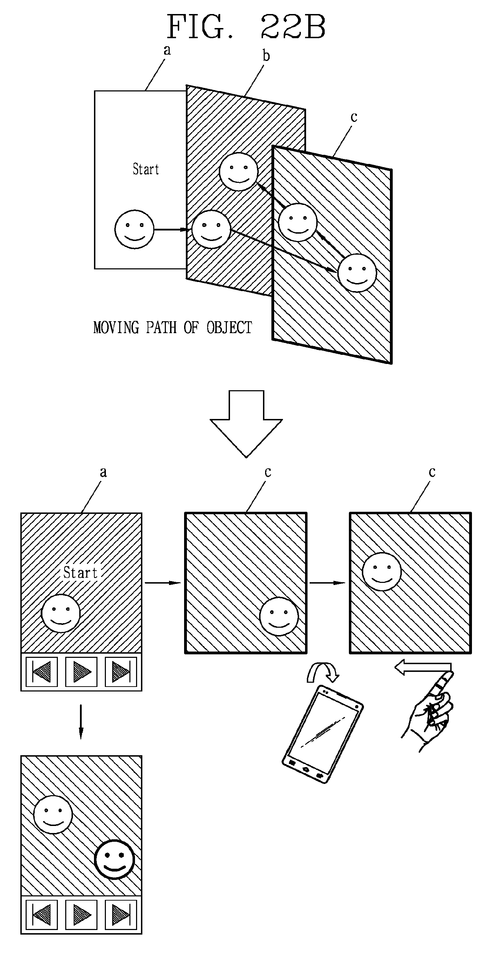

FIGS. 22A and 22B are detailed views illustrating an embodiment of displaying (indicating) a moving path of an object in a panoramic image. For the sake of explanation, it is assumed that a moving path of an object is a preview (a) → a first capture guide (b) → a second capture guide (c) → the first capture guide (b). A panoramic image of the object, captured along the moving path, may be stored in the memory 160. A user may thus display (playback) the panoramic image on the display unit 151 by selecting a start button. Here, a method of displaying the panoramic image may be decided by a user setting.

As illustrated in FIG. 22A, when the user setting is "time sequence," the controller 180 can display a background and the object in a slide form in sequence of time (a→ b→ c) or like playbacking a video.

In another example, the controller 180 can control only the object to be viewed in a separate manner. An output (reproduction, playback) of the object may be paused by use of a button, and also moved to a previous or subsequent position by using a rewind or forward button or in a left/right flicking manner.

As illustrated in FIG. 22B, the moving path of the object may be overlapped on the second capture guide (c). When the moving path of the object is overlapped, namely, when the object moves at the same position (in the same preview), the controller 180 can move only the object with maintaining a background. Specifically, when the moving path of the object is overlapped, the controller 180 can sharply output a previously-captured object (an earlier-captured object on the time basis), or output the object in the sequence of time. If a blurred object is touched, a time is moved to the corresponding object and the moving path of the object is viewed, starting from the time-moved point.

Also, when an object is output according to the sequence of time, the user can incline the terminal or apply a touch input or button input. Accordingly, the object, which has been captured earlier on the time basis, can be viewed, paused, zoomed in and the like, at the same position.

If several objects are output at the paused position or the zoomed-in position due to overlapping of the moving path of the object, each object may be blurred, sequentially output according to the lapse of time, or sequentially output like hologram according to an inclination of the terminal. In particular, for outputting the objects in the form of the hologram, if a phone (terminal) is inclined or touched in a direction indicated by an arrow of a play button, a previously-captured object (an object located at the rear) based on time may be moved to the front for output. If the phone is touched or inclined in an opposite manner, the object may be displayed in the original state.

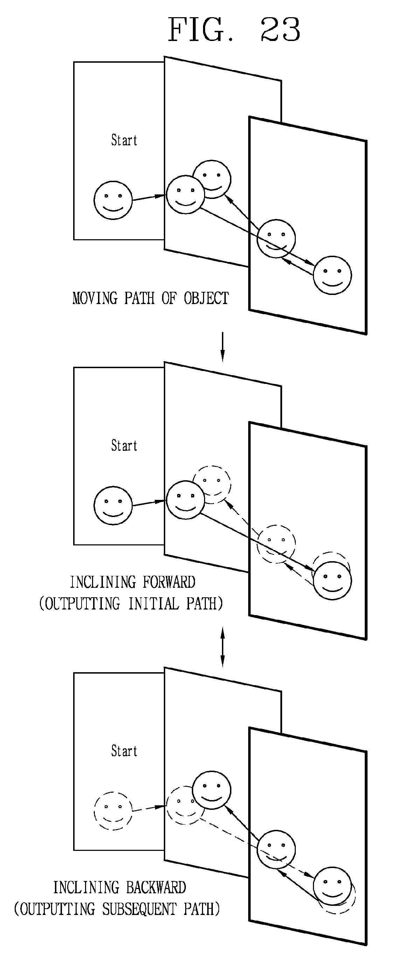

Next, FIG. 23 is a view illustrating a displaying method when a moving path of an object is overlapped. As illustrated in FIG. 23, when a moving path of an object is overlapped, a currently-captured object may be output sharply. When a user inclines or applies a touch input or button input to a terminal while outputting the object in the sequence of time, the user may view the previously-captured object on the time bases at the same position.

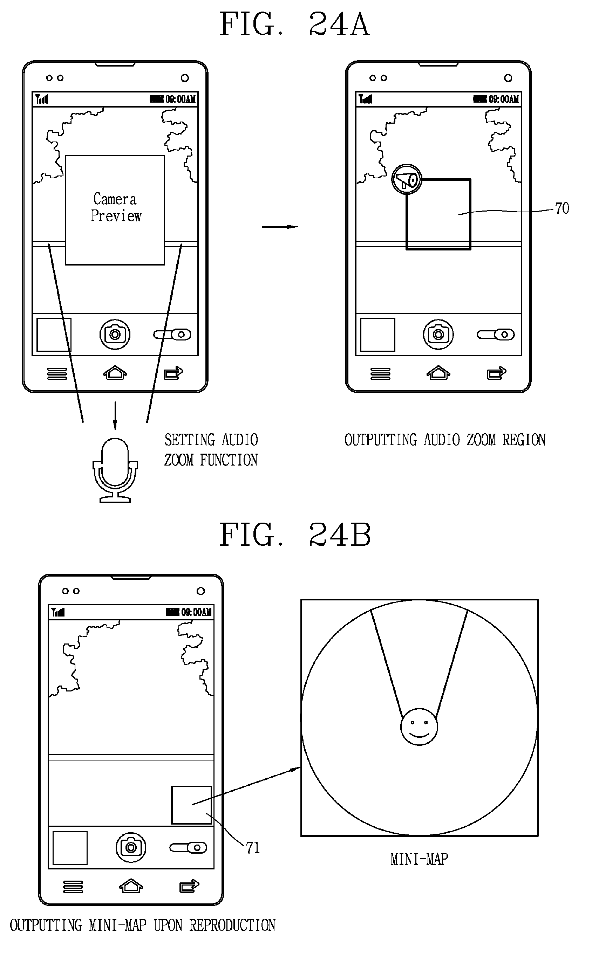

FIGS. 24 and 24B are views illustrating an operation of focusing audio sounds (seconds) generated from a sound source in a screen when a panoramic image is generated. While capturing a moving path of an object in an embodiment of the present invention, sounds generated in a direction, which is currently viewed in a preview, for example, surrounding sounds may be recorded using an audio zoom. Audio zooming refers to a series of operations of focusing, capturing and processing sounds in a predetermined direction through a microphone, and selectively recording desired sounds.

Such operation is referred to as an audio log, and used along with an object log. Therefore, if surrounding sounds are stored along with a moving path of an object in a panorama mode, the object log and the audio log may be simultaneously output upon reproducing a panorama.

Replay mode: sounds recorded by an audio zoom and a position of an object stored upon capturing are played. Here, as illustrated in FIG. 24A, an audio zoom region 70 may be indicated on a reproduction screen.

Free movement mode: while playing the sounds captured by the audio zoom, if a position where the user is viewing and an audio zoom position are the same as each other, the audio-captured sounds may be output at the corresponding position. When the viewing position and the audio zoom position are different from each other, surrounding sounds may be output. Here, as illustrated in FIG. 24B, the controller 180 can output a mini-map 71 on a lower portion of a screen to indicate an audio zoom position, and recognize user's eyes through a pupil recognition or face recognition of the user by use of a front camera.

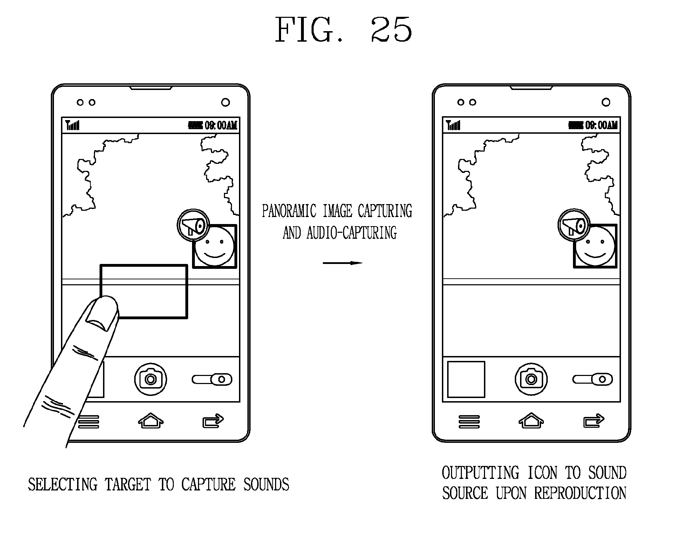

FIG. 25 is a view illustrating an operation of automatically recording sounds of a target to audio-capture while capturing a panoramic image. While capturing a panoramic image, if various sound sources, for example, a person, a moving object, a fixed object (TV or an electric bulletin board) and the like are recognized, an audio zoom may be executed with respect to the corresponding sound sources. When there are a plurality of sound sources (objects), the controller 180 can select the greatest object, and selectively audio-capture sounds of the user-selected sound source (object).

Afterwards, the controller 180 can output an icon to an audio-zoomed sound source when reproducing a panoramic image, to notify that sounds generated from the sound source have been audio-captured. Therefore, when the audio-zoomed object is located at the front when viewing a VR panorama, the sound of the corresponding object may be heard. If such audio-zoomed object is not present, surrounding sounds may be heard.

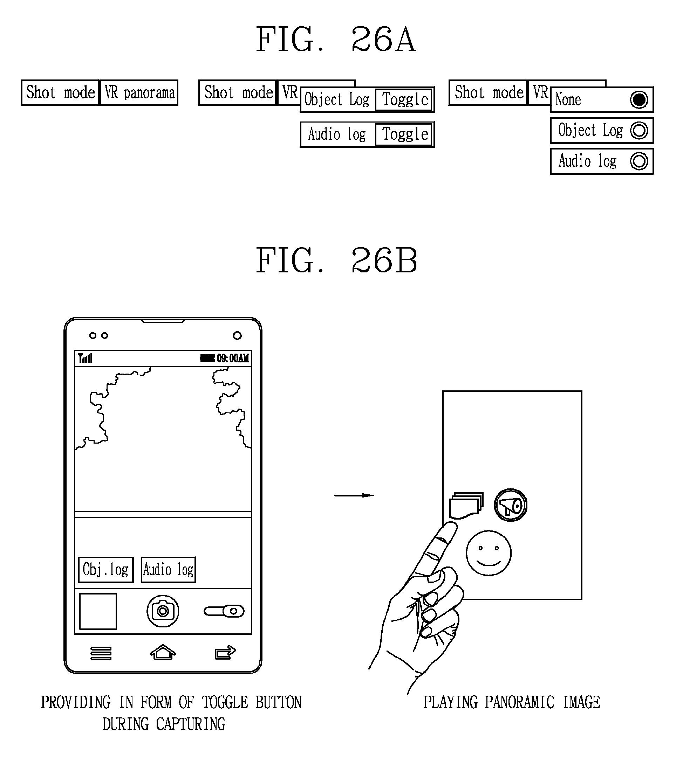

FIGS. 26A and 26B are views of user settings for capturing a panoramic image. A capturing mode may basically be classified into a shot mode indicating normal capturing, and a VR panorama mode indicating panorama capturing (left configuration).

As illustrated in FIG. 26A, detailed menus of a VR panorama mode disclosed herein may include an object log and an audio log. The object log and the audio log may be constructed in a toggle form (middle configuration), or in an individually set form (right configuration). Therefore, a user may carry out panorama capturing with respect to a desired object by selecting a log and an audio zoom from the user menus.

In another example, as illustrated in FIG. 26B, during the normal capturing, an object log and an audio zoom button may be provided at one side of a screen to set the panorama capturing. Afterwards, when the panorama capturing is completed, the user may play the captured panorama by selecting an indicator indicating the panoramic image.

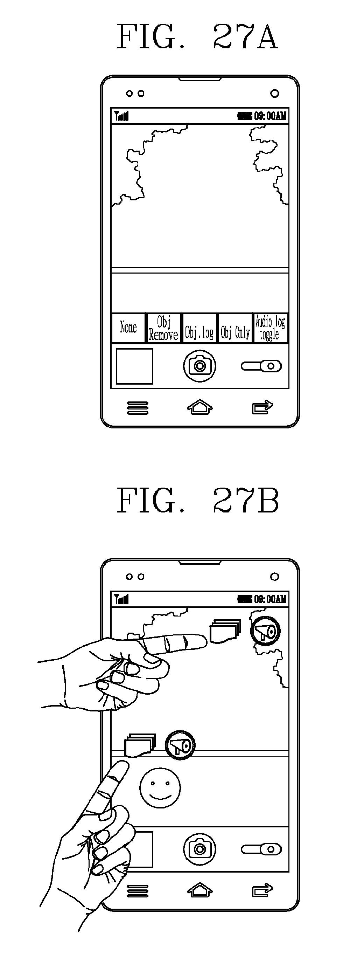

FIGS. 27A and 27B are views illustrating an embodiment of an operation of selectively storing an object log and an audio zoom on a screen after capturing a panoramic image. According to an embodiment of the present invention, an object log and an audio zoom may selectively be edited and stored on a corresponding screen after capturing a panoramic image to which the object log and the audio zoom have been applied.

In a first embodiment, as illustrated in FIG. 27A, after capturing, at least one button, for example, None, Obj remove, Obj log, Obj only and Audio log toggle, may be output on a screen. Then, tracked data (object log) and an audio may be selectively edited (e.g., removed) and stored according to the button setting.

That is, upon setting the button 'none,' the controller 180 can store a captured image without a log. Upon setting the button 'Obj remove,' the controller 180 can store the captured image by removing only a tracked object. Upon setting 'Obj log,' the controller 180 can store an object track log. Upon setting 'Obj only,' the controller 180 can store the captured image after removing the other objects except for the tracked object.

When the buttons 'None, Obj log and Obj only' are selected, the controller 180 can remove the audio log, which is basically included, in a toggling manner. Even time when each of the buttons is manipulated, the button manipulation may be immediately applied to the screen and the thusly-caused change may be visible.

In a second embodiment disclosed herein, track data (log) of an object and an audio may be stored without being removed, and thereafter, selectively output. A representative image of a file format may be defined according to settings. The defined representative image may be output on a gallery. Therefore, the user may activate the object log and the audio log through an additional manipulation in the gallery.

Therefore, referring to FIG. 27B, when a panoramic image is stored according to the first embodiment, an indicator located at an upper end of the screen may indicate whether or not there is the object log or the audio log. When the panoramic image is stored according to the second embodiment, the indicator may be operated in the toggling manner so as to activate a desired function (log and/or audio zoom). In addition, a user may press an indicator on a tracked object, activate a log and an audio zoom of an object which the user arranges on a center, or turn on a log and an audio zoom of an object enlarged by the user.

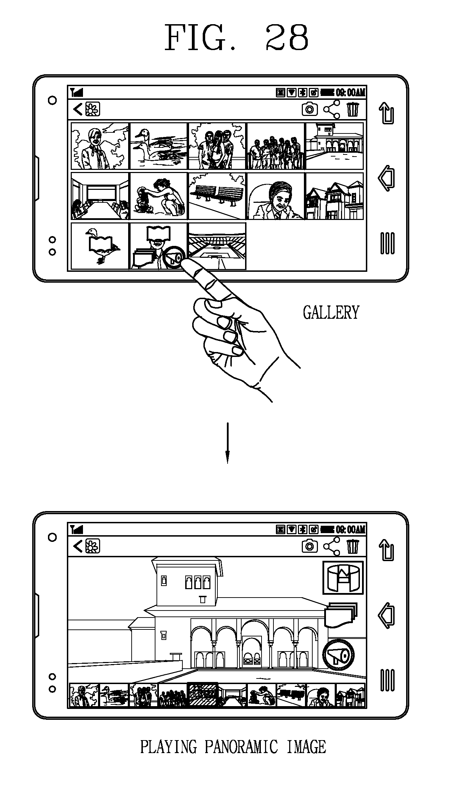

FIG. 28 is a view illustrating a panoramic image stored in a gallery. As illustrated in FIG. 28, a panoramic image may be displayed in a gallery in a distinctive manner from other contents using an icon (a log icon and an audio zoom icon). When the corresponding icon is touched by a user, a view mode may be activated such that the panoramic image is played.

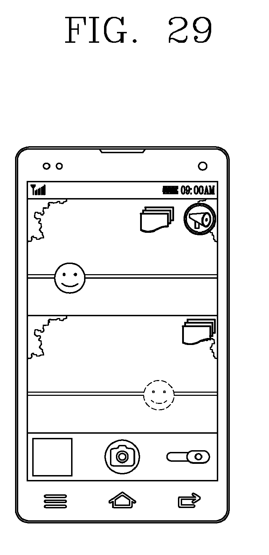

FIG. 29 is an view of displaying a movement of an object using split views. As illustrated in FIG. 29, the controller 180 can display a movement of an object by splitting a screen into plural views according to a user selection when a panoramic image is played. Here, the number of split views (screens) may be set to correspond to the number of objects. For example, if several objects are recognized in one panoramic image, the user may view the movement of each object automatically or by selecting a split-view.

In another example, the user may display a tracked object on one split view, and display an opposite screen of the tracked object on another split view in the manner of splitting the screen into views. This may allow for viewing different scenes on one screen. In still another example, by using the split-view function, a moving posture of the tracked object may be automatically reproduced in one split view, and the object may be manually moved by the user in another split view.

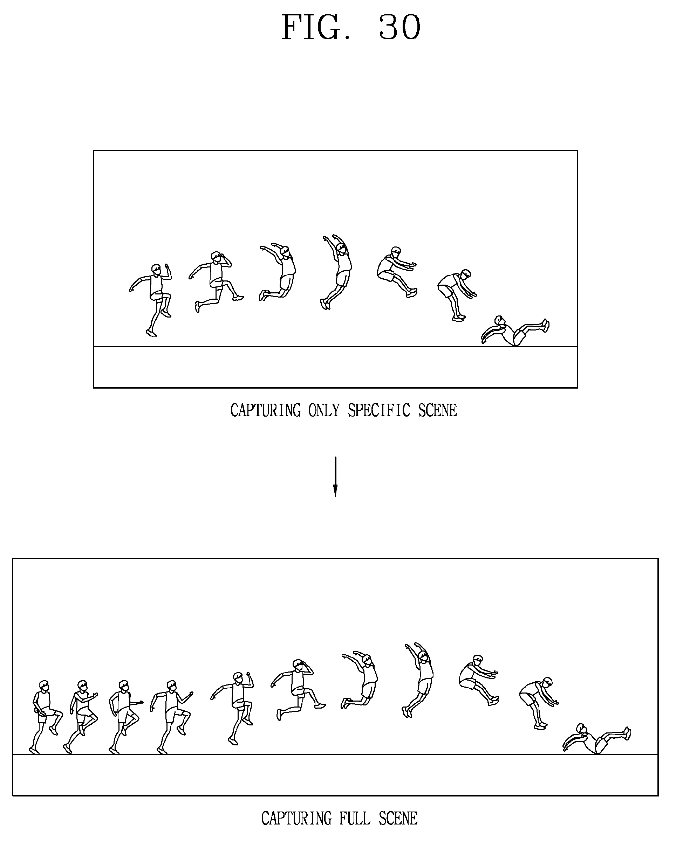

FIG. 30 is a view illustrating an effect of a panorama capturing method of a mobile terminal in accordance with an embodiment disclosed herein. As illustrated in FIG. 30, since it is possible to capture only one action (image) in the related art, for example, only jumping and landing portion (last portion) in gymnastics, a panorama including a full action (moving path) may not be produced.

However, in an embodiment of the present invention, capturing is performed by providing guides along a moving path of an object. Hence, upon capturing a vault in gymnastics, athletics, a long jump, a pole vault and the like, a log may be output from the beginning of running. This allows for producing a panorama including a player's entire moving path. Specifically, an embodiment of the present invention is useful in capturing a 360°-capturing including the moving path.

As described, embodiments of the present invention provide a guide region according to an object when the corresponding object is captured in a panorama mode, such that a user can automatically capture a guide region set to a subsequent preview. This results in providing a panoramic image including a full moving path of the object.

Further, in accordance with one embodiment of the present invention, the method can be implemented as computer-readable codes in a program-recorded medium. The computer-readable medium may include all types of recording devices each storing data readable by a computer system. Examples of such computer-readable media may include ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal.

The configurations and methods of the mobile terminal in the aforesaid embodiments may not be limitedly applied, but such embodiments may be configured by a selective combination of all or part of the embodiments so as to implement many variations.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A method of controlling a mobile terminal (100), the method comprising:
displaying a camera preview on a display of the mobile terminal;
selecting an object to capture in the camera preview;
displaying (S130) a capture guide on the display indicating a subsequent capturing region along a moving direction of the selected object; and
capturing (S150), via a controller of the mobile terminal, a panoramic image including a moving path of the object in the camera preview when the mobile terminal is moved so the camera preview substantially aligns with the capture guide within a predetermined amount.

2. The method of claim 1, further comprising:
displaying (S100) an object guide on the object to indicate that the object is a target to track,
wherein the capture guide has a shape similar to the camera preview and is displayed to partially overlap the camera preview when the object moves away from a center of the camera preview by more than a predetermined distance.

3. The method of claims 1 and 2, wherein the capture guide is displayed sharply when the object moves away from a center of the camera preview by a predetermined distance, or is displayed to be gradually sharp according to a moving distance of the object from the center of the camera preview.

4. The method of anyone of claims 1 through 3, further comprising:
capturing a background once in each camera preview;
capturing the moving path of the object a predetermined number of times in each camera preview; and
generating the panoramic images using the captured backgrounds for a plurality of camera previews and the captured moving path of the object.

5. The method of anyone of claims 1 through 4, further comprising:
displaying the captured panoramic image;
displaying the moving path of the object in a sequence of time on the panoramic image; and
displaying a best shot if the object changes in size and moves less than a predetermined amount in each camera preview when the panoramic image is displayed.

6. The method of anyone of claims 1 through 5, further comprising:
displaying (S200) moving paths of a plurality of objects using split views when the plurality of objects are included in the panoramic image;
inserting (S220) a previous object in a non-captured section per each predetermined interval, when a part of the moving path of the object is not captured due to fast movement of the object; and
distinctively displaying the inserted previous object.

7. The method of anyone of claims 1 through 6, further comprising:
displaying a currently-captured object and a previously-captured object with different transparencies, when a moving path of one object is overlapped; and
displaying a plurality of objects with different colors, when moving paths of the plurality of objects are overlapped.

8. The method of anyone of claims 1 through 7, further comprising:
when the object is captured in a partially cut portion at a boundary of the camera preview, retouching (S420) the cut portion using an object of a previous position and processing an empty space of the panoramic image, generated due to the retouched portion, by gradating a color of an adjacent portion.

9. The method of anyone of claims 1 through 8, further comprising:
when a full panoramic image in a rectangular shape including the moving path of the object is produced, filling an empty space with an image, which has been captured at a same position, based on global positioning system (GPS) information.

10. A mobile terminal (100), comprising:
a camera (121);
a display (151) configured to display a camera preview obtained by the camera (121), and display a capture guide indicating a subsequent capturing region along a moving direction of a selected object in the camera preview; and
a controller (180) configured to capture a panoramic image including a moving path of the object in the camera preview when the mobile terminal is moved so the camera preview substantially aligns with the capture guide within a predetermined amount.

11. The mobile terminal of claim 10, wherein the controller (180) is further configured to control display of an object guide on the object to indicate that the object is a target to track.

12. The mobile terminal of claims 10 and 11, wherein the capture guide has a shape similar to the camera preview and is displayed to partially overlap the camera preview when the object moves away from a center of the camera preview by more than a predetermined distance.

13. The mobile terminal of anyone of claims 10 through 12, wherein the controller (180) is further configured to sharply display the capture guide when the object moves away from a center of the camera preview by a predetermined distance, or gradually display the capture guide as sharp according to a moving distance of the object from the center of the camera preview.

14. The mobile terminal of anyone of claims 10 through 13, wherein the controller (180) is further configured to:
capture a background once in each camera preview,
capture the moving path of the object a predetermined number of times in each camera preview, and
generate the panoramic images using the captured backgrounds for a plurality of camera previews and the captured moving path of the object.

15. The mobile terminal of anyone of claims 10 through 14, wherein the controller (180) is further configured to:
display the captured panoramic image,
display the moving path of the object in a sequence of time on the panoramic image;
display a best shot if the object changes in size and moves less than a predetermined amount in each camera preview when the panoramic image is displayed; and
display moving paths of a plurality of objects using split views when the plurality of objects are included in the panoramic image.
